# EUROPEAN PATENT APPLICATION

(11) **EP 4 530 163 A1**
(43) Date of publication of application: **02.04.2025**
(21) Application number: 24196316.4
(22) Date of filing: 23.08.2024
(51) Int. Cl.: B62D 25/08, B60R 19/12, B60R 19/48, B62D 21/15

(54) **VEHICLE STRUCTURE**

(30) Priority: 15.09.2023 JP 2023150384; 29.03.2024 JP 2024057051
(71) Applicant: Suzuki Motor Corporation, Shizuoka 432-8611 (JP)
(72) Inventor: OKURA, Kohei, HAMAMATSU-SHI, 432-8611 (JP); KAWAHARA, Shunya, HAMAMATSU-SHI, 432-8611 (JP)
(74) Representative: Plasseraud IP

(57) **Abstract**

[Problem to be Solved] To efficiently absorb an impact while protecting a sensor device.

[Solution] A vehicle structure 2 includes an outer panel 4 configured to form a design surface on an outer side of a vehicle, a vehicle body structural body 3 configured to support the outer panel 4 from a back surface side of the outer panel 4, a reinforcing member 5 configured to reinforce the outer panel 4 from the back surface side of the outer panel 4, a sensor device 9 mounted on the reinforcing member 5 and configured to sense an external environment of the vehicle, and a low rigidity member 6 having rigidity lower than rigidity of the vehicle body structural body 3, disposed adjacent to the reinforcing member 5, and connected to a back surface of the outer panel 4, wherein the reinforcing member 5 includes a sensor peripheral part 20 which is a portion of the reinforcing member 5 on a periphery of the sensor device 9, and in a vehicle front-rear direction, a tip position 20a of the sensor peripheral part 20 on a vehicle outer side and a tip position 6x1 of the low rigidity member 6 on the vehicle outer side or a connection position 6x0 for connecting the low rigidity member 6 to the outer panel 4 are located within a predetermined very small range.

## Description

### [Technical Field]

The present invention relates to a vehicle structure of an automobile or the like, and more specifically, relates to a vehicle structure for the front part or the rear part of a vehicle.

### [Background Art]

As one example of a vehicle body structure of a vehicle of this kind, a vehicle structure described in Patent Literature 1 is known. The vehicle structure described in Patent Literature 1 includes an upper bar and a bumper beam provided at the front part of the vehicle and extending in the vehicle width direction, a radar device that senses (detects) objects in front of the vehicle, and a bracket extending between the upper bar and the bumper beam to support the radar device, and the bracket is provided with a deformation inducing part that induces deformation by impact received in a collision of the front part of the vehicle. In the vehicle structure, when an impactor in a pedestrian protection test collides with the front part of the vehicle, the deformation inducing part is deformed or broken, and the bracket is displaced rearward to absorb the impact, thus enhancing impact absorbing performance.

### [Citation List]

### [Patent Literature]

[Patent Literature 1] JP 2017-215186 A

### [Summary of Invention]

### [Problems to be Solved by the Invention]

However, in the vehicle structure disclosed in Patent Literature 1, the bracket is locally deformed and moved rearward with respect to the deformation inducing part, and hence, there is a concern that much of the load that cannot be absorbed by the deformation energy or the breaking energy of the bracket will be concentrated on the bumper beam having rigidity. From the viewpoint of absorbing impact by dispersing the load across the front part of the vehicle, there is room for improvement. In the vehicle structure disclosed in Patent Literature 1, there is also room for improvement from the viewpoint of protecting the radar device (sensor device) in a collision.

The present invention has been made under such circumstances, and it is an object of the present invention to provide a vehicle structure that can efficiently absorb an impact while protecting a sensor device in a collision.

### [Means for Solving the Problems]

According to one mode of the present invention, a vehicle structure is provided including: an outer panel configured to form a design surface on an outer side of a vehicle for a front part or a rear part of the vehicle; a vehicle body structural body configured to support the outer panel from a back surface side of the outer panel; a reinforcing member configured to reinforce the outer panel from the back surface side of the outer panel; and a sensor device mounted on the reinforcing member and configured to sense an external environment of the vehicle, wherein the vehicle structure includes a low rigidity member having rigidity lower than rigidity of the vehicle body structural body, disposed adjacent to the reinforcing member, and connected to a back surface of the outer panel, the reinforcing member includes a sensor peripheral part which is a portion of the reinforcing member on a periphery of the sensor device, and in a vehicle front-rear direction, a tip position of the sensor peripheral part on a vehicle outer side and a target position which is either one of a tip position of the low rigidity member on the vehicle outer side or a connection position for connecting the low rigidity member to the outer panel are located within a predetermined very small range.

According to another mode of the present invention, a vehicle structure is provided including: an outer panel configured to form a design surface on an outer side of a vehicle for a front part or a rear part of the vehicle; a vehicle body structural body configured to support the outer panel from a back surface side of the outer panel; a reinforcing member configured to reinforce the outer panel from the back surface side of the outer panel; and a sensor device mounted on the reinforcing member and configured to sense an external environment of the vehicle, the vehicle structure being characterized in that the reinforcing member includes a sensor peripheral part which is a portion of the reinforcing member on a periphery of the sensor device, and a protruding part protruding toward a vehicle outer side in a vehicle front-rear direction from a lower part of the reinforcing member, and a protruding tip position of the protruding part is located on the vehicle outer side in the vehicle front-rear direction relative to a tip position of the sensor peripheral part on the vehicle outer side.

### [Advantageous Effects of Invention]

According to one mode and another mode of the present invention, it is possible to provide a vehicle structure that can efficiently absorb an impact while protecting a sensor device in a collision.

### [Brief Description of Drawings]

[Figure 1] Figure 1 is a perspective view of a vehicle structure according to an embodiment of the present invention as viewed from the front side.
[Figure 2A] Figure 2A is a perspective view of a state in which an outer panel and bumper faces are removed from the vehicle structure, as viewed from the front side.
[Figure 2B] Figure 2B is a side view of the state in which the outer panel and the bumper faces are removed from the vehicle structure.
[Figure 3] Figure 3 is a front view showing the state in which the outer panel and the bumper faces are removed from the vehicle structure.
[Figure 4] Figure 4 is an enlarged perspective view of a reinforcing member of the vehicle structure as viewed from the back side.
[Figure 5] Figure 5 is a back view of the vehicle structure.
[Figure 6] Figure 6 is a perspective view of a low rigidity member of the vehicle structure as viewed from the front side.
[Figure 7] Figure 7 is an enlarged perspective view of the center of the vehicle structure in the vehicle width direction as viewed from the back side.
[Figure 8] Figure 8 is a cross-sectional view taken along A-A in Figure 5.
[Figure 9] Figure 9 is an enlarged perspective view of the left part in the vehicle width direction of the vehicle structure, as viewed from the back side.
[Figure 10] Figure 10 is a cross-sectional view taken along B-B in Figure 5.
[Figure 11A] Figure 11A is a diagram showing the first state of the vehicle structure with which a colliding object collides from the front side.
[Figure 11B] Figure 11B is a diagram showing the second state of the vehicle structure subsequent to Figure 11A.
[Figure 11C] Figure 11C is a diagram showing the third state of the vehicle structure subsequent to Figure 11B.
[Figure 11D] Figure 11D is a diagram showing the fourth state of the vehicle structure subsequent to Figure 11C.
[Figure 11E] Figure 11E is a diagram showing the fifth state of the vehicle structure subsequent to Figure 11D.

### [Mode for Carrying Out the Invention]

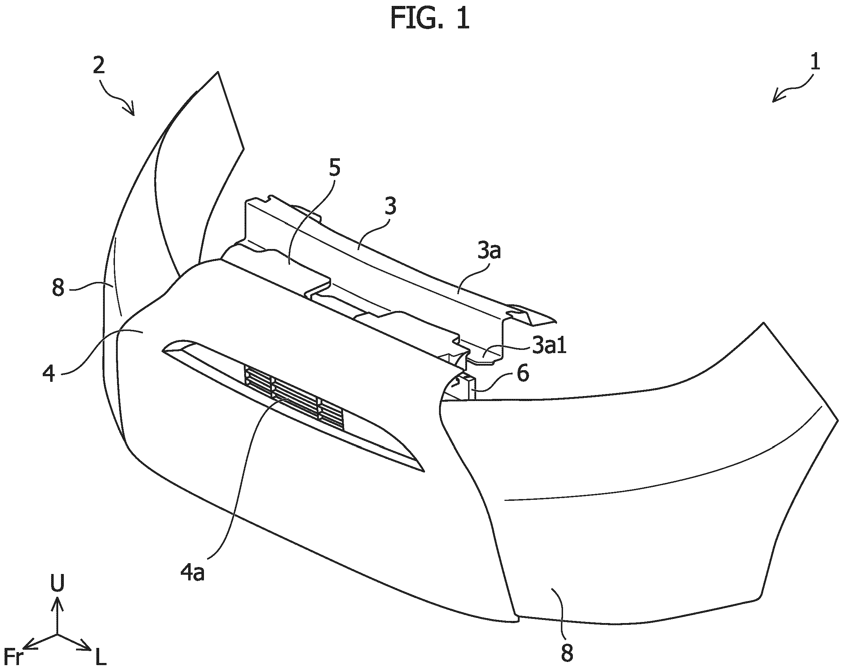

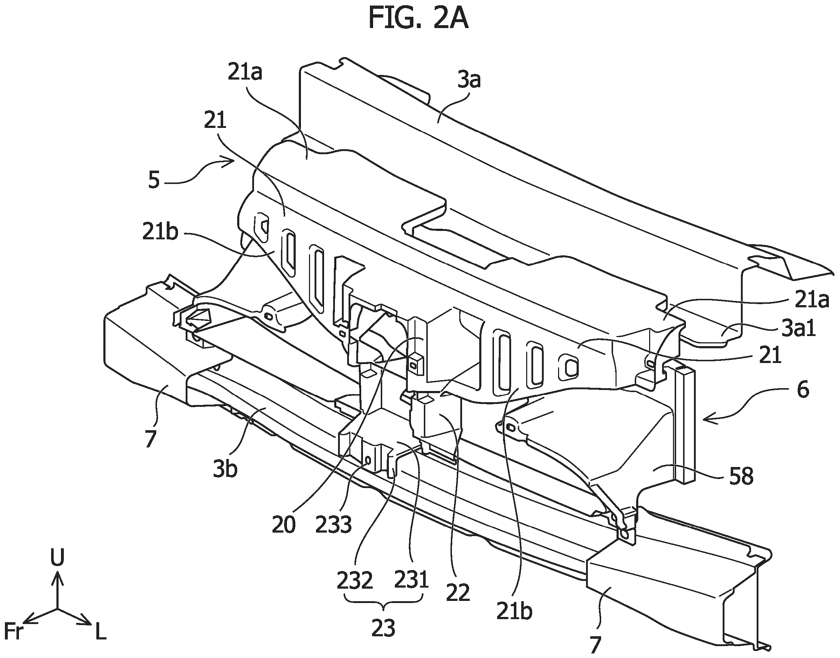

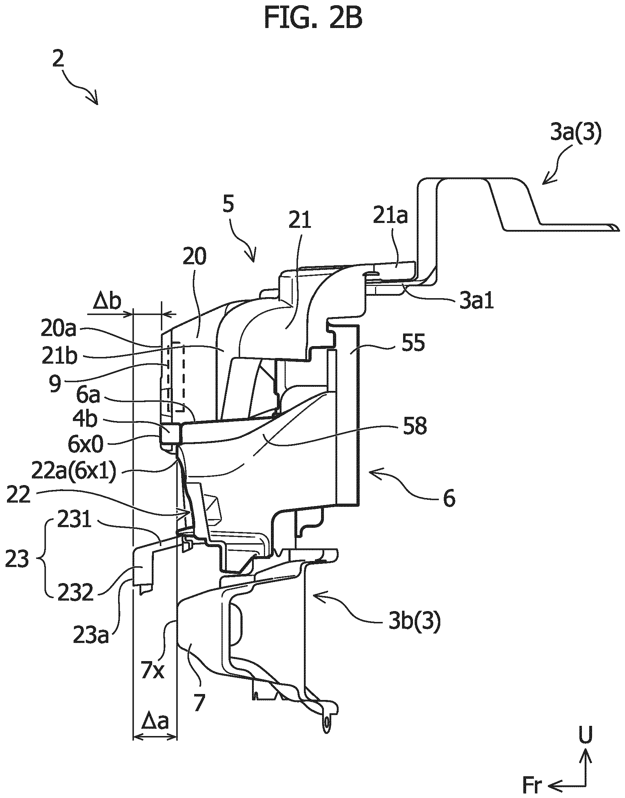

Hereinafter, an embodiment of the present invention will be described with reference to the Drawings. Figure 1 is a perspective view of a vehicle structure 2 of a vehicle 1 according to one embodiment of the present invention as viewed from the front side, Figure 2A is a perspective view of a state in which an outer panel 4 and bumper faces 8 are removed from the vehicle structure 2, as viewed from the front side, and Figure 2B is a side view of the state in which the outer panel 4 and the bumper faces 8 are removed from the vehicle structure 2. In the present embodiment, the vehicle structure 2 is used as the structure for the front part of the vehicle 1. In the drawings, the direction of an arrow Fr indicates the front side in a front-rear direction of the vehicle 1 (hereinafter referred to as the front-rear direction), the direction of an arrow L indicates the left side in the vehicle width direction of the vehicle 1 (hereinafter referred to as the vehicle width direction) when the vehicle 1 is viewed from the rear side toward the front side, and the direction of an arrow U indicates the upper side in the up-down direction of the vehicle 1 (hereinafter referred to as the up-down direction). In the description made hereinafter, in the vehicle structure 2 for the front part of the vehicle 1, in the front-rear direction, "outer side" indicates the front side, "back side" indicates the rear side, "outer surface" indicates the front surface, and "back surface" indicates the rear surface. There may be cases in which "outer side" is described as "front side", "outer surface" is described as "front side surface", "back side" is described as "inner side", and "back surface" is described as "inner surface". When a cross section is shown, a cross section taken along a plane along the horizontal direction is taken as "transverse cross section", and a cross section taken along a plane perpendicular to the horizontal direction is taken as "longitudinal cross section".

The vehicle structure 2 will be described with reference to Figure 1, Figure 2A, and Figure 2B. The vehicle structure 2 includes a vehicle body structural body 3 configured to form a portion of the vehicle body structure for the front part of the vehicle 1, the outer panel 4 configured to form the design surface on the outer side of the vehicle for the front part of the vehicle 1 and supported by the vehicle body structural body 3, a reinforcing member 5 configured to reinforce the outer panel 4 from the back surface side of the outer panel 4, a sensor device 9 mounted on the reinforcing member 5, and a low rigidity member 6 disposed adjacent to the reinforcing member 5.

The vehicle body structural body 3 supports the outer panel 4 from the back surface side of the outer panel 4. The vehicle body structural body 3 is a member made of steel and having high rigidity. The vehicle body structural body 3 includes a first vehicle body frame member 3a extending in the vehicle width direction and disposed on the upper side, and a second vehicle body frame member 3b disposed at a position lower than the first vehicle body frame member 3a and extending in the vehicle width direction. The second vehicle body frame member 3b is disposed parallel to the first vehicle body frame member 3a in such a way as to be located forward of the first vehicle body frame member 3a in the vehicle front-rear direction.

The vehicle body structural body 3 supports the upper part and the lower part of the outer panel 4. In the example shown in the drawing, the upper part of the outer panel 4 is supported by the first vehicle body frame member 3a, and the lower part of the outer panel 4 is supported by the second vehicle body frame member 3b.

To be more specific, the first vehicle body frame member 3a has a substantially hat shape in cross section, and extends in the vehicle width direction. Side reinforcing part upper walls 21a, described later, of the reinforcing member 5 are coupled to the upper surface of a front flange 3a1 of the first vehicle body frame member 3a. The upper part of the outer panel 4 is coupled to the front parts of the side reinforcing part upper walls 21a, so that the upper part of the outer panel 4 is supported by the first vehicle body frame member 3a via the reinforcing member 5.

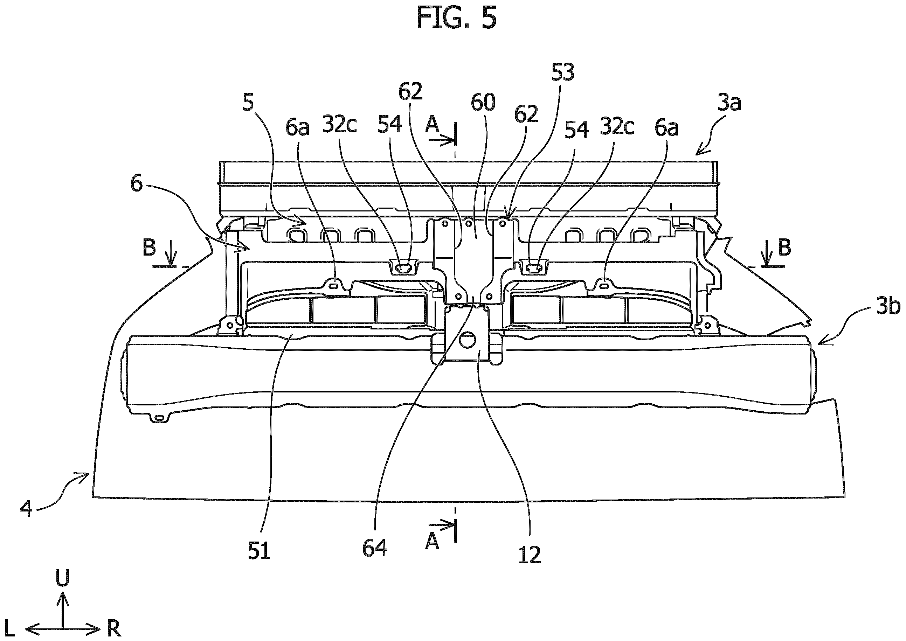

A support bracket 12 (see Figure 5, described later) is provided to the center upper part of the second vehicle body frame member 3b in the vehicle width direction, the support bracket 12 protruding upward from the second vehicle body frame member and supporting the reinforcing member 5 from below. The center lower part (in the example shown in the drawing, a lower support part 22, described later) of the reinforcing member 5 is coupled to the support bracket 12, and is supported by the support bracket 12 from below. The lower part of the outer panel 4 is coupled to the lower front part (in the example shown in the drawing, a protruding end wall 232 described later) of the reinforcing member 5, so that the lower part of the outer panel 4 is supported by the second vehicle body frame member 3b via the reinforcing member 5 and the support bracket 12.

Impact absorbing members 7 (see Figure 2A) are mounted and provided to the front surfaces of both end portions in the vehicle width direction of the second vehicle body frame member 3b, which are surfaces on the vehicle outer side in the vehicle front-rear direction, the impact absorbing members 7 protruding toward the vehicle outer side in the vehicle front-rear direction from the second vehicle body frame member 3b. Each impact absorbing member 7 is formed to have a substantially groove shape that is open rearward in longitudinal cross section. The impact absorbing member 7 is made of a thin steel plate. The rigidity of the impact absorbing member 7 is lower than the rigidity of the vehicle body structural body 3 (more specifically, the second vehicle body frame member 3b). The impact absorbing member 7 is a member that absorbs impact caused by the collision when a colliding object collides with the vehicle 1 from the front side of the vehicle 1. In the vehicle structure 2 for the front side of the vehicle 1, the low rigidity member 6 is an air guide for guiding traveling wind during traveling to a predetermined place.

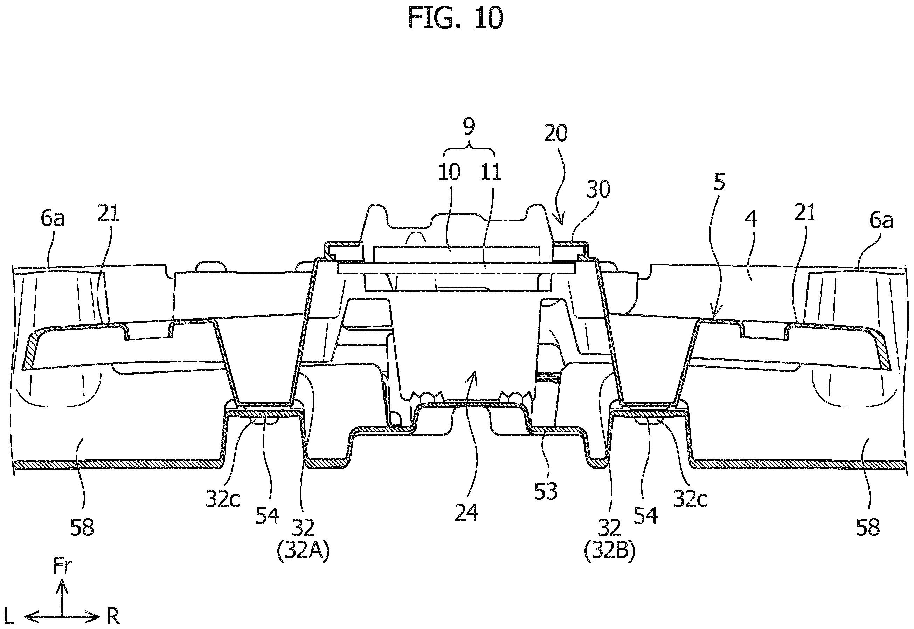

The sensor device 9 includes a sensor 10, and a sensor bracket 11 configured to support the sensor 10 and formed into a thin plate shape (see Figure 10). The sensor 10 is a sensor body that senses (detects) the external environment of the vehicle, and the sensor 10 emits (transmits) or receives sensing waves (detection waves), which senses the external environment of the vehicle. For the sensor 10, a millimeter wave radar, which uses electromagnetic waves in the millimeter wave band as sensing waves, a sonic wave sensor (ultrasonic sensor/sonar), which uses sonic waves as sensing waves, a camera (imaging device), which uses electromagnetic waves in the visible light band or electromagnetic waves in the infrared band as sensing waves, or any other sensor is used. Sensing waves are not limited to being transmitted from the sensor 10. Sunlight may be used as sensing waves, and sensing waves may be transmitted from a sensing wave transmitter provided as a separate body from the sensor 10.

The outer panel 4 is a member that forms the outer design surface for the front part of the vehicle 1, and extending in the vehicle width direction. The outer panel 4 is an injection molded product made of a resin, and is a large, thin panel expanding in a wide area in the vehicle width direction. Therefore, the rigidity of the outer panel 4 is lower than the rigidity of the vehicle body structural body 3. A front grille 4a is provided at the center of the outer panel 4 in the vehicle width direction, and has a plurality of vent holes. The upper side of the outer panel 4 is supported by the first vehicle body frame member 3a via the reinforcing member 5, and the lower side of the outer panel 4 is supported by the second vehicle body frame member 3b via the impact absorbing members 7. The bumper faces 8 are disposed at both end portions of the outer panel 4 in the vehicle width direction. Front lamps (headlights), not shown in the drawing, that illuminate a region in front of the vehicle 1 are provided to the bumper faces 8. The bumper faces 8 may be integrally formed with the outer panel 4, or may be formed as separate bodies from the outer panel 4. The bumper faces 8 also form the outer design surface for the front part of the vehicle, and the bumper faces 8 may be included in the elements of the outer panel 4. That is, the bumper faces 8 may be parts of the outer panel 4.

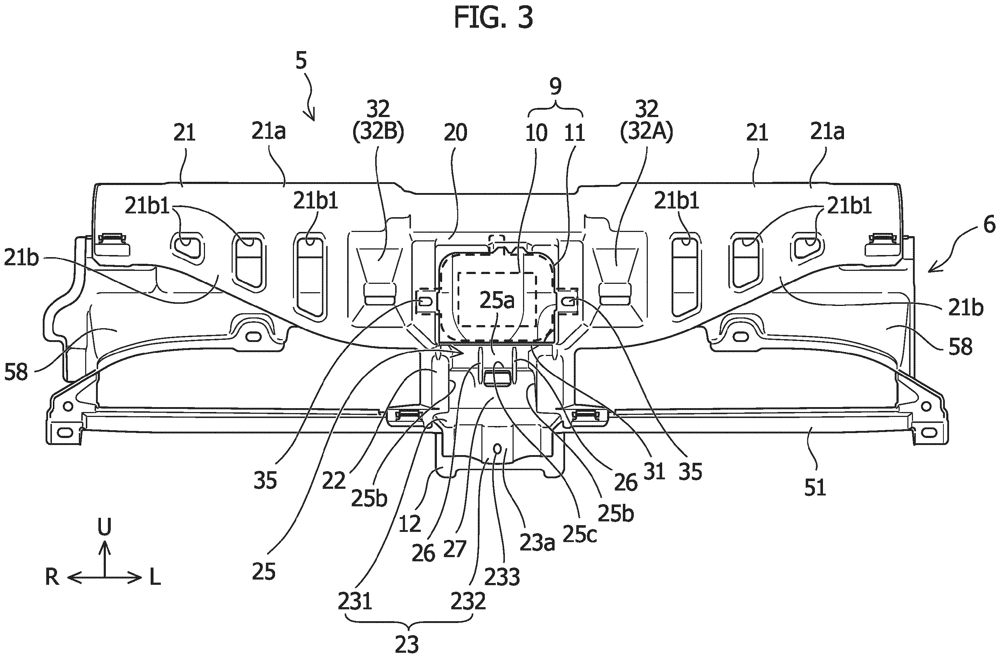

Next, the reinforcing member 5 will be described with reference to Figure 2A, Figure 2B, and Figure 3. Figure 3 is a front view showing the state in which the outer panel 4 and the bumper faces 8 are removed from the vehicle structure 2, and showing the arrangement of the reinforcing member 5 and the low rigidity member 6.

The reinforcing member 5 extending in the vehicle width direction is provided to the back side of the outer panel 4. The reinforcing member 5 reinforces the outer panel 4 from the back surface side of the outer panel 4. The reinforcing member 5 is an injection molded product made of a resin, and the rigidity of the reinforcing member 5 is lower than the rigidity of the vehicle body structural body 3. A sensor peripheral part 20, on which the sensor device 9 is mounted, is provided at the center of the reinforcing member 5. In other words, the reinforcing member 5 includes the sensor peripheral part 20 and side reinforcing parts 21. The sensor peripheral part 20 is a portion of the reinforcing member 5 on the periphery of the sensor device 9. The side reinforcing parts 21 are disposed on both left and right sides of the sensor peripheral part 20 in the vehicle width direction, and extend in the vehicle width direction.

The reinforcing member 5 supports the outer panel 4 from below by the side reinforcing parts 21, and supports the outer panel 4 from behind on the front surface side (front side) of the reinforcing member 5, thus reinforcing the outer panel 4 from the back surface side.

The reinforcing member 5 further includes the lower support part 22 and a protruding part 23. The lower support part 22 is a part provided below the sensor peripheral part 20 to support the sensor peripheral part 20 from below. The lower support part 22 is contiguously formed with the lower part of the sensor peripheral part 20. The protruding part 23 protrudes toward the vehicle outer side (front side) in the vehicle front-rear direction from the lower part of the reinforcing member 5. The protruding part 23 includes a front-rear wall 231 extending forward from the lower end of the lower support part 22, and the protruding end wall 232 extending downward from the front end of the front-rear wall 231, thus forming the frontend portion of the protruding part 23. A protruding tip position 23a of the protruding part 23, which protrudes forward, is located on the front surface of the protruding end wall 232. As shown in Figure 3, the reinforcing member 5 is formed into a T-shape as viewed from the front side, and the sensor peripheral part 20, the lower support part 22, and the protruding part 23 are disposed at the center of the reinforcing member 5 in the vehicle width direction.

As shown in Figure 2B, in the front-rear direction, a tip position 22a of the lower support part 22 on the vehicle outer side is disposed inward (rearward) of a tip position 20a of the sensor peripheral part 20 on the vehicle outer side. That is, in the vehicle front-rear direction, the protruding part 23 protrudes toward the vehicle outer side (front side) from a position on the vehicle inner side (rear side) relative to the tip position 20a of the sensor peripheral part 20. The protruding tip position 23a of the protruding part 23 on the vehicle outer side in the vehicle front-rear direction is, in the front-rear direction, located on the vehicle outer side (front side) relative to the tip position 20a of the sensor peripheral part 20 on the vehicle outer side. The protruding tip position 23a is a position for a portion of the reinforcing member 5 which protrudes the most toward the vehicle outer side (front side) in the vehicle front-rear direction. Therefore, a separation dimension Δa in the front-rear direction between the protruding tip position 23a of the protruding part 23 and the tip position 22a of the lower support part 22 is larger than a separation dimension Δb in the front-rear direction between the protruding tip position 23a of the protruding part 23 and the tip position 20a of the sensor peripheral part 20. The protruding end wall 232 of the protruding part 23 has a panel fixing hole 233 for coupling and fixing the protruding part 23 to the outer panel 4.

In the example shown in the drawing, in the vehicle front-rear direction, a tip position 6x1 of the low rigidity member 6 on the vehicle outer side aligns with or substantially aligns with the tip position 22a of the lower support part 22 of the reinforcing member 5 on the vehicle outer side (hereinafter, the description will be made assuming that the tip position 6x1 aligns with the tip position 22a). Accordingly, the separation dimension Δa in the front-rear direction between the protruding tip position 23a of the protruding part 23 and the tip position 22a of the lower support part 22 matches a separation dimension in the front-rear direction between the protruding tip position 23a of the protruding part 23 and the tip position 6x1 of the low rigidity member 6.

When a colliding object collides with the vehicle 1 from the front side, which is the outer side, of the vehicle 1, the protruding part 23 is liable to receive impact caused by the collision prior to parts of the reinforcing member 5 that are not the protruding part 23. As a result, the protruding part 23 and the periphery of the protruding part 23 are deformed before an impact load is applied to the sensor peripheral part 20. Accordingly, impact caused by the collision is absorbed, and hence, deformation and displacement of the sensor peripheral part 20 can be reduced.

The separation dimension Δa is larger than the separation dimension Δb. As a result, when the colliding object collides with the vehicle 1 from the front side, which is the outer side, of the vehicle 1, deformation range (deformation stroke) of the protruding part 23 is increased, and the protruding part 23 and the periphery of the protruding part 23 are deformed before an impact load is applied to the sensor peripheral part 20. As a result, impact caused by the collision is absorbed and hence, deformation and displacement of the sensor peripheral part 20 are effectively reduced.

In the example shown in the drawing, the front-rear wall 231 inclines downward as it is approaching the protruding end wall 232 from the lower support part 22. The inclination direction of the front-rear wall 231 is not limited to the above. The front-rear wall 231 may incline upward as it is approaching the protruding end wall 232 from the lower support part 22.

The front-rear wall 231 inclines downward or upward as it is approaching the protruding part 23 from the lower support part 22, and hence, when the colliding object collides with the vehicle 1 from the front side, which is the outer side, of the vehicle 1, deformation of the protruding part 23 is easily promoted before an impact load is applied to the sensor peripheral part 20. As a result, impact caused by the collision is absorbed, and hence, deformation and displacement of the sensor peripheral part 20 are further reduced.

Each side reinforcing part 21 includes the side reinforcing part upper wall 21a supported by the first vehicle body frame member 3a, and a side reinforcing part front wall 21b extending downward from the outer end edge (front end edge) of the side reinforcing part upper wall 21a, which is the end edge on the vehicle outer side in the vehicle front-rear direction. The side reinforcing part 21 has an L-shape in longitudinal cross section. In the example shown in the drawing, a plurality of (three in the example shown in the drawing) through holes 21b1, which are separate from each other in the vehicle width direction are open in the side reinforcing part front wall 21b. Deformation of the side reinforcing part 21 in a collision is promoted by the plurality of through holes 21b1.

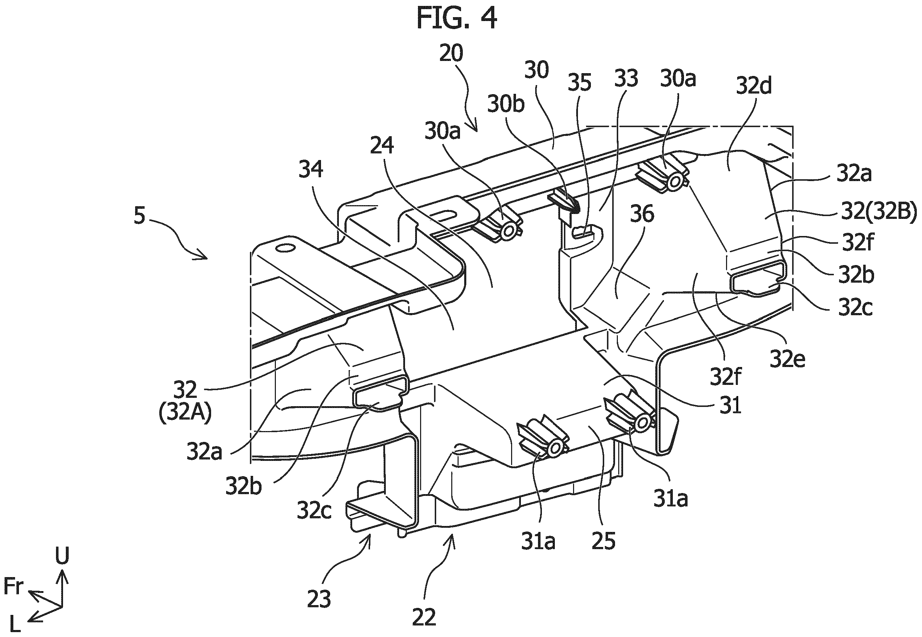

Next, the sensor peripheral part 20 will be described with reference to Figure 2A, Figure 2B, Figure 3, and Figure 4. Figure 4 is an enlarged perspective view of the center of the reinforcing member 5 in the vehicle width direction as viewed from the back side.

The sensor peripheral part 20 includes two sets of pairs of facing parts that face each other. In more detail, the sensor peripheral part 20 includes an upper wall 30, a lower wall 31, a first side part 32A, a second side part 32B, and a sensor mounting wall 33.

A sensor containing space 24 is formed in the inside of the sensor peripheral part 20 of the reinforcing member 5, the sensor device 9 being contained (housed) in the sensor containing space 24. The upper wall 30 is disposed above the sensor containing space 24, the lower wall 31 is disposed below the sensor containing space 24, the first side part 32A is disposed on the left of the sensor containing space 24, the second side part 32B is disposed on the right of the sensor containing space 24, and the sensor mounting wall 33 is disposed on the outer side (front side) of the sensor containing space 24, which is the side facing the outer panel 4. The sensor peripheral part 20 is open rearward.

The sensor device 9 (more specifically, the sensor bracket 11) is mounted on the back surface of the sensor mounting wall 33, which is the surface on the vehicle inner side in the vehicle front-rear direction (see Figure 10, described later). The sensor device 9 is disposed between the upper wall 30 and the lower wall 31 in the up-down direction, and is disposed between the first side part 32A and the second side part 32B in the vehicle width direction. Accordingly, the sensor peripheral part 20 of the reinforcing member 5 is configured to surround the sensor device 9 by the upper wall 30 and the lower wall 31 disposed in such a way as to face each other in the up-down direction, the first side part 32A and the second side part 32B disposed in such a way as to face each other in the vehicle width direction, and the sensor mounting wall 33 disposed on the outer side of the sensor containing space 24, which is the vehicle outer side in the vehicle front-rear direction. Thus, deformation of the sensor peripheral part 20 is reduced, thus reducing deviation of the position of the sensor device 9 in a normal state, while the sensor peripheral part 20 is deformed in a collision to absorb impact energy.

A pair of upper connecting parts 30a, which are separate from each other in the vehicle width direction, and a positioning guide 30b located between the pair of upper connecting parts 30a, which are separate from each other in the vehicle width direction, are provided to the backend surface of the upper wall 30, which is the end surface on the vehicle inner side in the vehicle front-rear direction. A pair of lower connecting parts 31a, which are separate from each other in the vehicle width direction, are provided to the backend surface of the lower wall 31, which is the end surface on the vehicle inner side in the vehicle front-rear direction. Each of the pair of upper connecting parts 30a and the pair of lower connecting parts 31a has a hole for screw fastening. The pair of upper connecting parts 30a and the pair of lower connecting parts 31a are parts provided to be coupled to a coupling part 53 described later provided to the low rigidity member 6, and the positioning guide 30b is a guide for positioning the coupling part 53 with respect to the sensor peripheral part 20.

The sensor mounting wall 33 has an opening part 34 such that portions of the sensor mounting wall 33 are kept on the left and right sides in the vehicle width direction and on the upper side. Sensor fixed parts 35, to which the sensor device 9 (the sensor bracket 11) is fixed, are provided on the back surface of the sensor mounting wall 33 at positions on both left and right sides of the opening part 34. The sensor bracket 11 is mounted on the back surface of the sensor mounting wall 33 via the pair of sensor fixed parts 35, and the entirety or a part of the opening part 34 is covered by the sensor bracket 11. The sensor 10 of the sensor device 9 emits, through the opening part 34, sensing waves that sense the external environment of the vehicle, or the sensor 10 of the sensor device 9 receives sensing waves.

The sensor peripheral part 20 includes adjacent parts 32, each of which is disposed adjacent to the sensor fixed part 35, and extends in the front-rear direction from the back surface of the sensor mounting wall 33. In the example shown in the drawing, the sensor peripheral part 20 includes a left adjacent part 32 extending rearward, and disposed adjacent to the sensor fixed part 35 provided on the left side, and includes a right adjacent part 32 extending rearward, and disposed adjacent to the sensor fixed part 35 provided on the right side. In the example shown in the drawing, the first side part 32A on the left side forms the adjacent part 32 on the left side, and the second side part 32B on the right side forms the adjacent part 32 on the right side. In the example shown in the drawing, the adjacent parts 32 are disposed on the left and right of the sensor device.

The adjacent parts 32 (32A, 32B) bulge in the front-rear direction. Each adjacent part 32 includes a peripheral wall part 32a having a cylindrical shape, and an end wall part 32b located at the rear end of the peripheral wall part 32a, which is the end on the vehicle inner side in the vehicle front-rear direction. The adjacent part 32 is formed into a recessed shape on the outer surface of the sensor mounting wall 33, which is the surface on the vehicle outer side in the vehicle front-rear direction. A plate-shaped coupling piece 32c extending in the horizontal direction is provided to the end wall part 32b. The peripheral wall part 32a includes an upper peripheral wall part 32d disposed at the upper part, a lower peripheral wall part 32e disposed at the lower part, and left and right vertical peripheral wall parts 32f located between the upper peripheral wall part 32d and the lower peripheral wall part 32e. The upper peripheral wall part 32d inclines downward as it is approaching the end wall part 32b from the back surface of the sensor mounting wall 33, and the lower peripheral wall part 32e inclines upward as it is approaching the end wall part 32b from the back surface of the sensor mounting wall 33. The adjacent part 32 has a bulging structure that bulges in the front-rear direction and hence, the rigidity of the adjacent part 32 is increased, and deformation and displacement of the sensor peripheral part 20 are more effectively reduced.

The sensor peripheral part 20 includes connecting walls 36 that connect the lower wall 31, the adjacent parts 32, and the sensor mounting wall 33 to each other. To be more specific, the connecting wall 36 is located at a corner part at which the lower wall 31, the adjacent part 32 (the first side part 32A, the second side part 32B), and the sensor mounting wall 33 intersect with each other, and the connecting wall 36 couples the respective elements (31, 32, 33) to each other at the corner part. As a result, the rigidity is increased at the peripheries of both corner parts disposed on the lower side of the sensor peripheral part 20.

As shown in Figure 2A and Figure 3, the lower support part 22 is provided with a recessed part 25 formed into a recessed shape that is open toward the outer panel 4. The upper side wall of the recessed part 25 is formed of the lower wall 31 of the sensor peripheral part 20. In other words, referring to Figure 4, the recessed part 25 is formed into a bulging shape bulging rearward, and thus may also be referred to as a bulging part.

As shown in Figure 2A and Figure 3, the lower support part 22 is provided with the recessed part 25 formed into a recessed shape from the surface of the lower support part 22 on the vehicle outer side in the vehicle front-rear direction. The upper side wall of the recessed part 25 is the lower wall 31 of the sensor peripheral part 20.

Referring to Figure 3, the recessed part 25 is formed of the lower wall 31 of the sensor peripheral part 20, a depth side wall 25a which is the depth wall of the recessed part 25, side walls 25b which are the left and right walls of the recessed part 25, and a recessed-shape-forming lower wall 25c which is the lower wall of the recessed part 25. The recessed part 25 is provided with a plurality of (two in the example shown in the drawing) vertical ribs 26, which are separate from each other in the vehicle width direction, and which extend in the up-down direction. The vertical ribs 26 extend downward from the lower wall 31 along the depth side wall 25a. The two vertical ribs 26 support the lower wall 31 from below. The depth side wall 25a of the recessed part 25 extends downward from the rear end of the lower wall 31, and the pair of lower connecting parts 31a are contiguously formed with the depth side wall 25a. At least one of two vertical ribs 26 is disposed in such a way as to overlap on the lower connecting part 31a in the vehicle width direction and the up-down direction. That is, at least one of the two vertical ribs 26 supports the lower connecting part 31a from behind. The two vertical ribs 26 support the lower wall 31 from below and hence, it is possible to reduce deformation of the sensor peripheral part 20, such as forward inclination or rearward inclination of the sensor 10.

Referring to Figure 4, a portion of the lower support part 22 which is located below the recessed part 25 also bulges rearward to form a lower bulging part 27. That is, the lower support part 22 bulges rearward in two stages. The left and right-side walls 25b of the recessed part 25 are coupled by the lower bulging part 27 and hence, the rigidity of the recessed part 25 is increased. The lower parts of the vertical ribs 26 extend to the upper part of the lower bulging part 27, and hence, the rigidity of a portion at which the recessed part 25 and the lower bulging part 27 are connected to each other is increased.

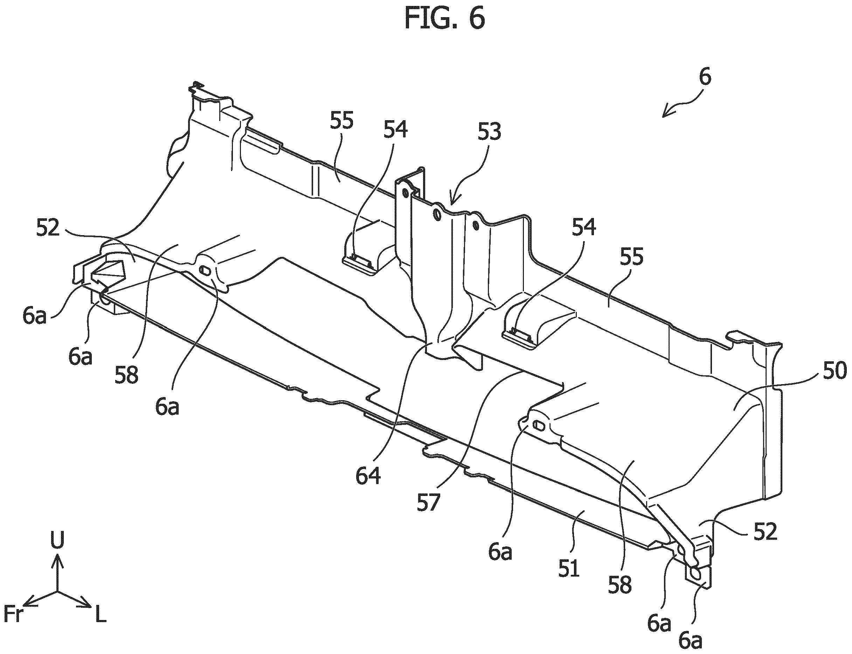

Next, the low rigidity member 6 will be described with reference to Figure 2A, Figure 2B, Figure 3, Figure 5, and Figure 6. Figure 5 is a back view of the vehicle structure 2. Figure 6 is a perspective view of the low rigidity member 6 as viewed from the front side. As shown in Figure 3, Figure 5, and Figure 6, the low rigidity member 6 extends in the vehicle width direction, and reinforces the reinforcing member 5 from the back surface side of the reinforcing member 5. The low rigidity member 6 is an injection molded product made of a resin. The low rigidity member 6 has rigidity lower than the rigidity of the vehicle body structural body 3. The low rigidity member 6 is connected to the back surface of the outer panel 4, and is coupled to the sensor peripheral part 20 of the reinforcing member 5. In other words, the sensor peripheral part 20 and the outer panel 4 are coupled to the low rigidity member 6.

As shown in Figure 6, the low rigidity member 6 includes an upper transverse extension part 50 extending in the vehicle width direction and located at the upper position, a lower transverse extension part 51 located at a lower position than the upper transverse extension part 50 and extending in the vehicle width direction, and left and right vertical extension parts 52 coupling both ends of the upper transverse extension part 50 in the vehicle width direction to both ends of the lower transverse extension part 51 in the vehicle width direction. The low rigidity member 6 is formed into a shape having an opening at the center as viewed from the front side. Although not particularly limited, in the present embodiment, as shown in Figure 2B, the low rigidity member 6 is provided with a pedestal part 4b for connecting the low rigidity member 6 to the outer panel 4. In the case in which the pedestal part 4b is provided, in the vehicle front-rear direction, a connection position 6x0 for connecting the low rigidity member 6 to the outer panel 4 is set to the end surface (front end surface) of the pedestal part 4b on the vehicle outer side.

The center of the upper transverse extension part 50 in the vehicle width direction is provided with the coupling part 53 connected (coupled) to the sensor peripheral part 20 provided to the reinforcing member 5. The upper transverse extension part 50 is also provided with vertical wall parts 55 erected in the up-down direction from the end edge of the upper transverse extension part 50 on the side opposite to the vehicle outer side in the front-rear direction such that the vertical wall parts 55 extend from both ends of the coupling part 53 in the vehicle width direction to both ends of the upper transverse extension part 50 in the vehicle width direction. The upper transverse extension part 50 includes a cut-out part 57 obtained by cutting it out, at the center in the vehicle width direction, the frontend side being the outer side which is the vehicle outer side in the vehicle front-rear direction, and side parts (upper side parts) 58 disposed on both end sides of the cut-out part 57 in the vehicle width direction. The coupling part 53 and the lower transverse extension part 51 are not coupled to each other. As shown in Figure 2B, each vertical wall part 55 is disposed at a position below the side reinforcing part upper wall 21a of the reinforcing member 5 and on the back side of the side reinforcing part front wall 21b of the reinforcing member 5.

As shown in Figure 2A and Figure 3, the side parts 58 of the upper transverse extension part 50 are disposed below the side reinforcing parts 21 of the reinforcing member 5. That is, the low rigidity member 6 includes the side parts 58 disposed on both sides in the vehicle width direction, and disposed below the side reinforcing parts 21. Consequently, an impact load in an offset collision occurring on the upper side can be received by the side reinforcing parts 21, and an impact load in the offset collision occurring on the lower side can be received by the side parts 58, and hence, dispersion of the load and absorption of the impact can be achieved. The side parts 58 which are parts of the low rigidity member 6 are disposed so as not to overlap, in the up-down direction, on the sensor peripheral part 20, which is provided at the center of the reinforcing member 5 in the vehicle width direction. That is, the side parts 58 which are parts of the low rigidity member 6 are disposed at positions offset, in the up-down direction, from the sensor peripheral part 20 provided at the center of the reinforcing member 5 in the vehicle width direction. Consequently, an impact load in a collision occurring on the upper side can be received by the sensor peripheral part 20, and an impact load in the collision occurring on the lower side can be received by the side parts 58, and hence, dispersion of the load and absorption of the impact can be achieved. Each side part 58 is disposed between the sensor peripheral part 20 of the reinforcing member 5 and the impact absorbing member 7 in the vehicle width direction. Consequently, an impact load in a collision can be received by the sensor peripheral part 20, the side parts 58, and the impact absorbing members 7 in a dispersed manner in the vehicle width direction.

The side reinforcing parts 21 are disposed on the vehicle inner side (rear side) in the vehicle front-rear direction relative to the tip position 20a of the sensor peripheral part 20 of the reinforcing member 5 on the vehicle outer side and relative to the tip position 6x1 of the low rigidity member 6 on the vehicle outer side. In the example shown in the drawing, the side reinforcing parts 21 are also disposed on the vehicle inner side relative to the connection position 6x0 for connecting the low rigidity member 6 to the outer panel (the frontend surface of the pedestal part 4b in the example shown in the drawing). That is, the side reinforcing parts 21 may be disposed on the vehicle inner side in the vehicle front-rear direction relative to the tip position 20a of the sensor peripheral part 20 and relative to the connection position 6x0 of the low rigidity member 6.

The side reinforcing parts 21 are disposed on the inner side (rear side), which is the vehicle inner side in the vehicle front-rear direction, relative to the outer side part (front part) of the sensor peripheral part 20, which is the part on the vehicle outer side in the vehicle front-rear direction, and relative to the outer side parts (front parts) of the side parts 58, which are the parts on the vehicle outer side in the vehicle front-rear direction. Consequently, after an impact load is received by the sensor peripheral part 20 and the side parts 58 in a collision, and before the colliding object hits the surfaces (front surfaces) of the side reinforcing parts 21 on the vehicle outer side in the vehicle front-rear direction, impact can be absorbed by deformation of the outer side part (front part) of the sensor peripheral part 20 and the outer side parts (front parts) of the side parts 58.

As shown in Figure 2B, in the vehicle front-rear direction, the tip position 20a of the sensor peripheral part 20 on the vehicle outer side and the tip position 6x1 of the low rigidity member 6 on the vehicle outer side (in the example shown in the drawing, the tip position 6x1 = the tip position 22a) are located within a predetermined very small range (that is, approximate to or align with each other). Alternatively, in the vehicle front-rear direction, the tip position 20a of the sensor peripheral part 20 and the connection position 6x0 for connecting the low rigidity member 6 to the outer panel 4 (the frontend surface of the pedestal part 4b) may be located within a predetermined very small range. In the present embodiment, a separation dimension in the front-rear direction between the protruding tip position 23a of the protruding part 23 and the tip position 6x1 of the low rigidity member 6 (=the tip position 22a) is taken as "Δa", and a separation dimension in the front-rear direction between the protruding tip position 23a of the protruding part 23 and the tip position 20a of the sensor peripheral part 20 of the reinforcing member 5 is taken as "Δb". In this case, the front-rear width (longitudinal width) of the "predetermined very small range" for the tip position 20a and the tip position 6x1 or the connection position 6x0 is, for example, either the separation dimension Δa or the separation dimension Δb, whichever is larger, and is Δa in the example shown in the drawing. That is, in the example shown in the drawing, the tip position 20a and the tip position 6x1 are located within the predetermined very small range having the front-rear width of Δa, and approximate to or align with each other. In the example shown in the drawing, it can be regarded that the tip position 20a and the connection position 6x0 of the low rigidity member 6 are located within the predetermined very small range having the front-rear width of Δa. Consequently, an impact load can be received by both the reinforcing member 5 and the low rigidity member 6 in a collision. In the example shown in the drawing, the tip position 20a of the sensor peripheral part 20 aligns or substantially aligns with the connection position 6x0 of the low rigidity member 6 (the frontend surface of the pedestal part 4b) in the front-rear direction.

As shown in Figure 2A and Figure 2B, the impact absorbing members 7 are disposed below the low rigidity member 6. In the vehicle front-rear direction, a protruding tip position 7x of each impact absorbing member 7 on the vehicle outer side and the tip position 6x1 of the low rigidity member 6 on the vehicle outer side are located within a predetermined very small range (that is, approximate to or align with each other). Alternatively, in the vehicle front-rear direction, the protruding tip position 7x of the impact absorbing member 7 on the vehicle outer side and the connection position 6x0 for connecting the low rigidity member 6 to the outer panel 4 (the frontend surface of the pedestal part 4b) may be located within the predetermined very small range. In the present embodiment, the front-rear width of the "predetermined very small range" for the protruding tip position 7x, the tip position 6x1 and the connection position 6x0 is, for example, either the separation dimension Δa or the separation dimension Δb, whichever is larger, and is Δa in the example shown in the drawing. That is, in the example shown in the drawing, the protruding tip position 7x and the tip position 6x1 are located within the predetermined very small range having the front-rear width of Δa, and approximate to each other. In the example shown in the drawing, it can be regarded that the protruding tip position 7x and the connection position 6x0 of the low rigidity member 6 are located within the predetermined very small range having the front-rear width of Δa.

In the front-rear direction, the tip position 20a of the sensor peripheral part 20 and the protruding tip position 7x of the impact absorbing member 7 are located within the predetermined very small range (that is, approximate to or align with each other). The front-rear width of the predetermined very small range is also either the separation dimension Δa or the separation dimension Δb, whichever is larger, and is Δa in the example shown in the drawing. Consequently, an impact load in a collision occurring on the upper side can be received by the sensor peripheral part 20, and an impact load in the collision occurring on the lower side can be received by the impact absorbing members 7, and hence, dispersion of the load and absorption of the impact can be achieved. In the vehicle width direction, the impact absorbing members 7 are disposed at both end portions of the second vehicle body frame member 3b in the vehicle width direction, and the protruding part 23 is disposed at the center in the vehicle width direction that does not overlap on the impact absorbing member 7 in the vehicle width direction. That is, the protruding part 23 is, in the vehicle width direction, disposed at a position offset from each impact absorbing member 7 provided to the second vehicle body frame member 3b. Consequently, it is possible to reduce a situation in which the protruding part 23 and the impact absorbing members 7 interfere with each other when deformed by an impact load in a collision, so that deformation is inhibited.

Slot holes 54 are provided in the upper transverse extension part 50 at positions outward of the coupling part 53 in the vehicle width direction. That is, the coupling part 53 is disposed between two slot holes 54. The slot holes 54 are slot-shaped through holes extending in the horizontal direction. The coupling pieces 32c formed at the end wall parts 32b of the adjacent parts 32 (the first side part 32A, the second side part 32B) of the sensor peripheral part 20 are coupled to the slot holes 54 of the low rigidity member 6. In other words, the low rigidity member 6 is coupled to the adjacent parts 32 of the sensor peripheral part 20 of the reinforcing member 5.

Three panel fixing parts 6a are provided to each of both sides in the vehicle width direction of the low rigidity member 6. In the example shown in the drawing, the panel fixing parts 6a are provided at positions in the vicinity of the cut-out part 57 of the side part 58, at the end portions of the lower transverse extension part 51 in the vehicle width direction, and at the lower end portions of the vertical extension parts 52. Each panel fixing part 6a has a through hole for fixing the low rigidity member 6 to the outer panel 4 by a fastening member, such as a screw, and both sides in the vehicle width direction of the low rigidity member 6 are connected to the outer panel 4. As shown in Figure 2B, each panel fixing part 6a provided in the vicinity of the cut-out part 57 of the side part 58 is provided with the pedestal part 4b for connecting the low rigidity member 6 to the outer panel 4.

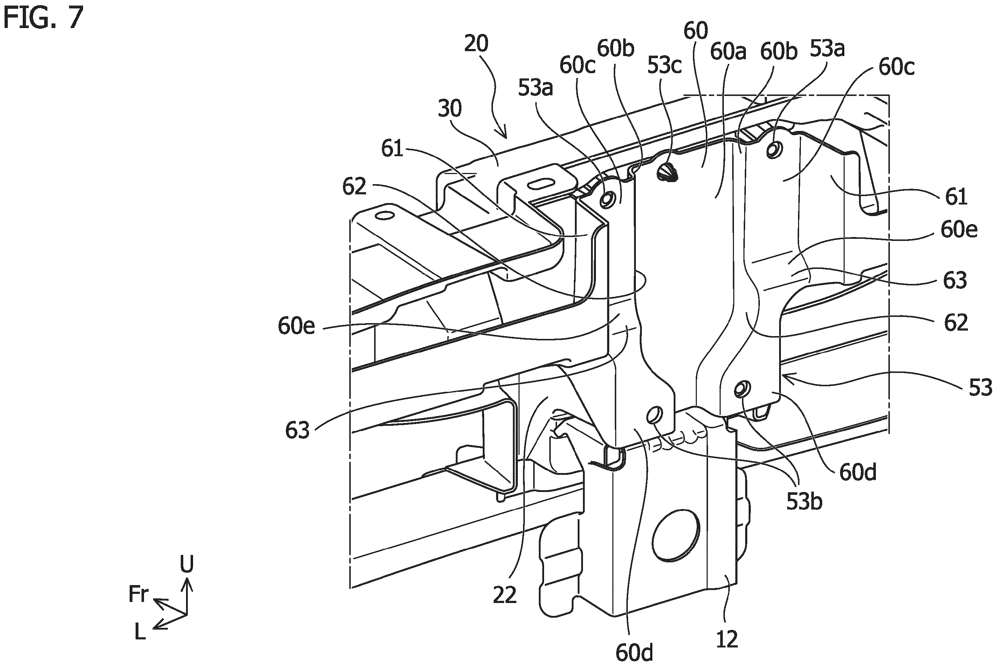

Next, the coupling part 53 provided at the center of the upper transverse extension part 50 in the vehicle width direction will be described with reference to Figure 7. Figure 7 is an enlarged perspective view showing the positional relationship between the sensor peripheral part 20 of the reinforcing member 5 and the coupling part 53, as viewed from the back side. The coupling part 53 is disposed on the back side of the sensor peripheral part 20, which is the vehicle inner side in the vehicle front-rear direction, and couples the upper wall 30 and the lower wall 31 of the sensor peripheral part 20, which are disposed in such a way as to face each other in the up-down direction.

The coupling part 53 includes a coupling surface part 60 extending in the up-down direction, and side wall surface parts 61 which are bent toward the back surface side from both ends of the coupling surface part 60 in the vehicle width direction. The coupling surface part 60 extends in the up-down direction, and has, in transverse cross section, a hat shape that protrudes toward the vehicle outer side (front side) in the vehicle front-rear direction. The coupling surface part 60 includes a first surface part 60a located at the center in the vehicle width direction, first connecting surface parts 60b which are bent toward the back surface side from both ends of the first surface part 60a in the vehicle width direction, second surface parts 60c which are bent outward in the vehicle width direction from the upper parts of the rear ends of the first connecting surface parts 60b, and third surface parts 60d which are bent outward in the vehicle width direction from the lower parts of the rear ends of the first connecting surface parts 60b. The second surface parts 60c are located on the vehicle outer side (front side) relative to the third surface parts 60d in the vehicle front-rear direction, and the second surface parts 60c and the pair of third surface parts 60d are connected to each other by second connecting surface parts 60e. That is, the coupling surface part 60 includes first stepped parts 62, each of which is a stepped part extending in the up-down direction and formed into a stepped shape in the front-rear direction by the first surface part 60a, the first connecting surface part 60b, the second surface part 60c, and the third surface part 60d. The width of the first surface part 60a in the vehicle width direction is not constant in the up-down direction, and the width in the vehicle width direction of the lower part of the first surface part 60a is smaller than the width in the vehicle width direction of the upper part of the first surface part 60a. The coupling surface part 60 also includes second stepped parts 63 each of which is a stepped part extending in the vehicle width direction and formed into a stepped shape in the front-rear direction by the second surface part 60c, the second connecting surface part 60e, and the third surface part 60d. The lower part of the coupling surface part 60 also extends in the up-down direction, and has, in transverse cross section, a hat shape that protrudes toward the vehicle outer side (front side) in the vehicle front-rear direction. A protruding part 64 at the lower part of the coupling surface part 60 has a smaller dimension in the vehicle width direction than other portions, the protruding part 64 being the protruding part protruding toward the rear side and having a hat shape in cross section (see Figure 6 and Figure 7).

The upper part of each second surface part 60c has an upper connection hole 53a for connecting the coupling part 53 to the upper wall 30 of the sensor peripheral part 20. The upper part of the first surface part 60a has a positioning hole 53c for positioning the coupling part 53 with respect to the sensor peripheral part 20. The positioning hole 53c is disposed between two upper connection holes 53a. The lower part of each third surface part 60d has a lower connection hole 53b for connecting the coupling part 53 to the lower wall 31 of the sensor peripheral part 20.

The upper connection holes 53a provided at the upper parts of the second surface parts 60c correspond to the upper connecting parts 30a provided to the backend surface of the upper wall 30 of the sensor peripheral part 20. The positioning hole 53c provided at the upper part of the first surface part 60a corresponds to the positioning guide 30b provided to the backend surface of the upper wall 30 of the sensor peripheral part 20. The lower connection holes 53b provided at the lower parts of the third surface parts 60d correspond to the lower connecting parts 31a provided to the backend surface of the lower wall 31 of the sensor peripheral part 20.

The coupling part 53 is connected to the upper connecting parts 30a of the sensor peripheral part 20 via the upper connection holes 53a by screws, and is connected to the lower connecting parts 31a of the sensor peripheral part 20 via the lower connection holes 53b by screws. As a result, the backend surface of the upper wall 30 of the sensor peripheral part 20 is coupled to the backend surface of the lower wall 31 of the sensor peripheral part 20 by the coupling part 53. That is, the coupling part 53 couples the upper wall 30 and the lower wall 31 of the sensor peripheral part 20 to each other, the upper wall 30 and the lower wall 31 forming a pair and being disposed in such a way as to face each other in the up-down direction.

The coupling part 53 of the low rigidity member 6 couples the upper wall 30 and the lower wall 31 of the sensor peripheral part 20 of the reinforcing member 5 to each other, and hence, the rigidity of the sensor peripheral part 20 is increased. In the present embodiment, although the coupling part 53 couples the upper wall 30 and the lower wall 31 disposed in such a way as to face each other in the up-down direction, the configuration is not always limited to such a configuration. For example, the coupling part 53 may couple the first side part 32A and the second side part 32B of the sensor peripheral part 20, which are disposed in such a way as to face each other in the vehicle width direction. Also in this case, the first side part 32A and the second side part 32B are coupled to each other by the coupling part 53, and hence, the rigidity of the sensor peripheral part 20 is increased.

The coupling surface part 60 includes the first stepped parts 62 extending in the up-down direction, and couples the upper wall 30 and the lower wall 31 of the sensor peripheral part 20, which are disposed in such a way as to face each other in the up-down direction. Therefore, the rigidity of the coupling part 53 in the up-down direction is increased, thus deformation of the coupling part 53 in the up-down direction can be reduced, and hence, it is possible to reduce displacement of the sensor peripheral part 20, such as deviation in the up-down direction of the position of the sensor device 9 mounted on the sensor peripheral part 20. The vehicle 1 vibrates in the up-down direction during traveling, and hence, such a configuration is particularly effective. The lower transverse extension part 51 disposed at the lower part of the low rigidity member 6 is not coupled to the coupling part 53, but is connected to the outer panel 4 via the panel fixing parts 6a provided at the end portions of the lower transverse extension part 51 in the vehicle width direction. As a result, the lower transverse extension part 51 can be easily deformed in a collision, and hence, impact in the collision is absorbed.

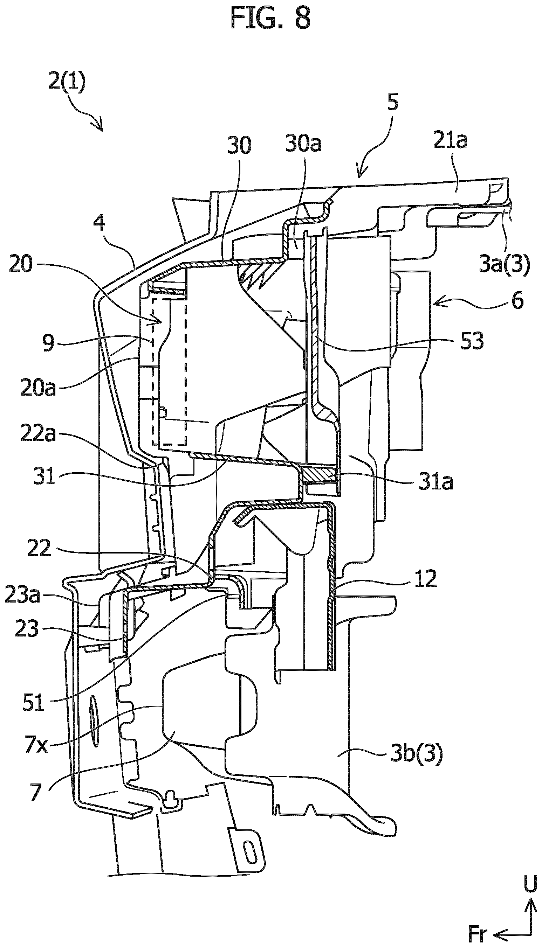

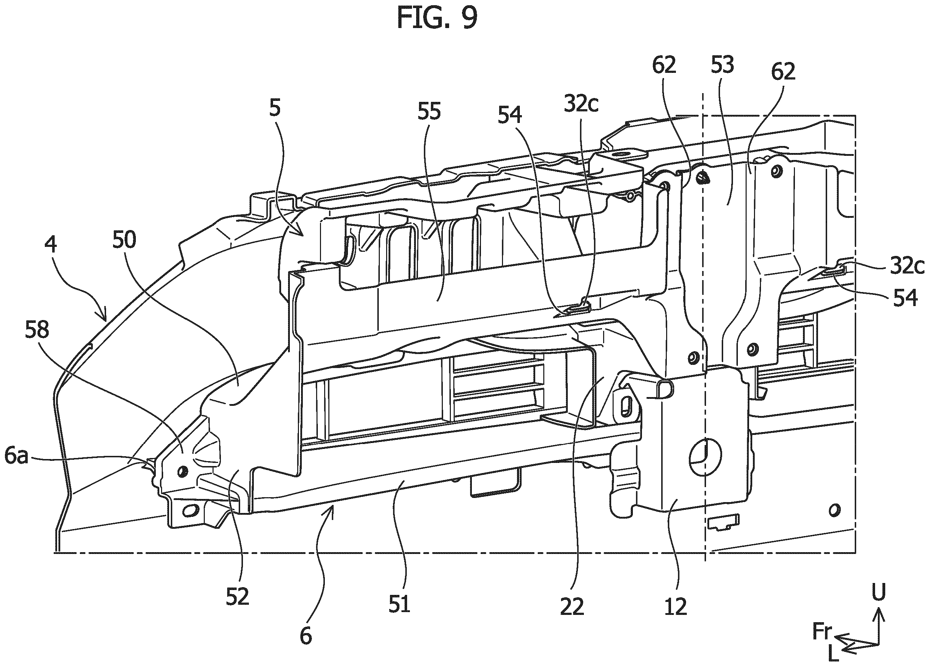

Next, the positional relationship between the reinforcing member 5, the low rigidity member 6, and the support bracket 12 will be described with reference to Figure 3, Figure 5, Figure 8, and Figure 9. Figure 8 is a cross-sectional view (longitudinal cross-sectional view) taken along A-A in Figure 5. Figure 9 is an enlarged perspective view of the left part in the vehicle width direction of the vehicle structure 2 according to the present embodiment, as viewed from the back side. As shown in Figure 3, Figure 5, Figure 8, and Figure 9, in the front-rear direction, the center of the lower transverse extension part 51 in the vehicle width direction is disposed between the support bracket 12 mounted at the center of the second vehicle body frame member 3b in the vehicle width direction and the lower support part 22 provided at the lower part of the sensor peripheral part 20 provided at the center of the reinforcing member 5 in the vehicle width direction. That is, the center in the vehicle width direction of the lower transverse extension part 51, which is the lower part of the low rigidity member 6, is disposed on the vehicle outer side relative to the support bracket 12 in the vehicle front-rear direction, and is disposed in such a way as to overlap on the support bracket 12 in the vehicle width direction and the up-down direction. In more detail, at a height position corresponding to the target part (the support bracket 12 in the example shown in the drawing), which is either one of the support bracket 12 or the second vehicle body frame member 3b, the center lower part of the low rigidity member 6 in the vehicle width direction is disposed on the vehicle outer side relative to the target part in the vehicle front-rear direction. The parts of the lower transverse extension part 51 on both sides in the vehicle width direction are disposed so as not to overlap on the support bracket 12. The lower transverse extension part 51 is not coupled to the coupling part 53. Therefore, deformation of the low rigidity member 6 is promoted in an offset collision. In the present embodiment, although the center of the lower transverse extension part 51 in the vehicle width direction is disposed between the support bracket 12 and the lower support part 22 in the front-rear direction, the configuration is not limited to such a configuration, and the center of the lower transverse extension part 51 in the vehicle width direction may be disposed between the second vehicle body frame member 3b and the lower support part 22.

As shown in Figure 8, the lower surface of the lower support part 22 located below the lower wall 31 of the sensor peripheral part 20 is supported by the upper surface of the support bracket 12, and the reinforcing member 5 is supported by the second vehicle body frame member 3b via the support bracket 12. The protruding part 23 is disposed on the vehicle outer side in the vehicle front-rear direction relative to the support bracket 12, which is mounted on the second vehicle body frame member 3b, and is disposed in such a way as to overlap on the support bracket 12 in the up-down direction. That is, at a height position corresponding to the support bracket 12, the protruding part 23 is disposed on the vehicle outer side relative to the support bracket 12 in the vehicle front-rear direction. Consequently, an impact load in a collision transferred to the protruding part 23 is easily released to the support bracket 12.

Next, a coupling structure between the reinforcing member 5 and the low rigidity member 6, for example, will be described with reference to Figure 9 and Figure 10. Figure 10 is a diagram (transverse cross-sectional view) as viewed in the direction shown by arrows B-B in Figure 5. In Figure 10, illustration of the outer panel 4 and the second vehicle body frame member 3b is omitted. As shown in Figure 9 and Figure 10, the coupling pieces 32c provided on both sides in the vehicle width direction of the sensor peripheral part 20 of the reinforcing member 5 are merely inserted into the pair of slot holes 54 provided to the low rigidity member 6. The side reinforcing parts 21 on both left and right sides of the reinforcing member 5 are supported by the first vehicle body frame member 3a (see Figure 2A). The side parts 58 on both sides in the vehicle width direction of the low rigidity member 6 are connected to the outer panel 4 via the panel fixing parts 6a. Therefore, in an offset collision, the coupling pieces 32c provided on both sides in the vehicle width direction can be easily removed from the pair of slot holes 54 provided to the low rigidity member 6. Accordingly, in an offset collision, deformation of the low rigidity member 6 on both sides in the vehicle width direction is easily promoted, and impact in the collision is absorbed by the deformation of the low rigidity member 6. The coupling part 53 of the low rigidity member 6 couples the upper wall 30 and the lower wall 31 of the sensor peripheral part 20, which are disposed in such a way as to face each other in the up-down direction, and hence, the impact load in a collision received by the low rigidity member 6 is received by the first vehicle body frame member 3a via the reinforcing member 5.

As shown in Figure 5 and Figure 9, the coupling surface part 60 of the coupling part 53 includes the pair of first stepped parts 62, which are stepped parts extending in the up-down direction, and the pair of first stepped parts 62 are located on the outer side in the vehicle width direction relative to the center of the coupling surface part 60 in the vehicle width direction. Therefore, when the coupling pieces 32c provided on both sides in the vehicle width direction are removed from the pair of slot holes 54 provided to the low rigidity member 6 in an offset collision, deformation of the coupling surface part 60 in the vehicle width direction is promoted.

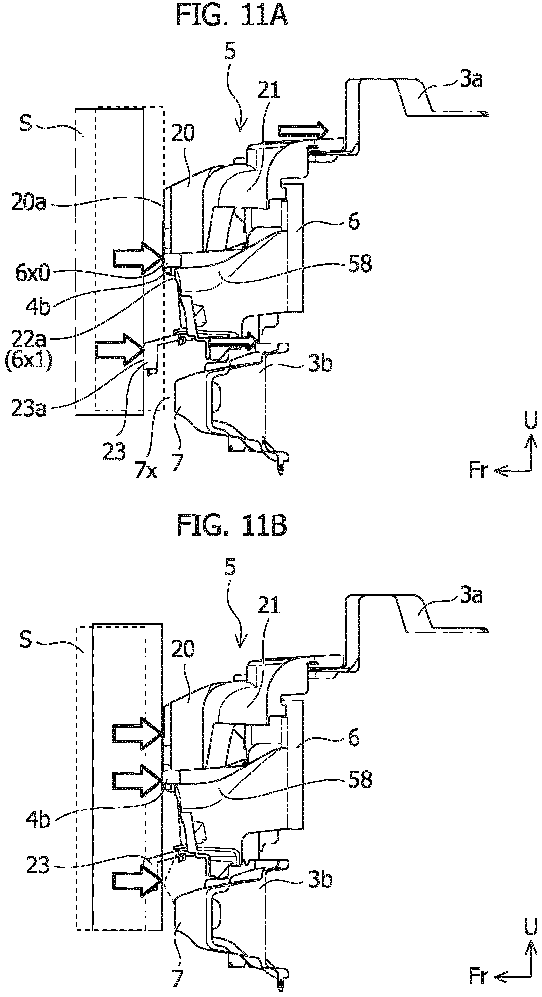

Next, a state of the vehicle structure 2 with which a colliding object S collides from the front side will be described with reference to Figure 11A to Figure 11E. Figure 11A is a diagram showing the first state of the vehicle structure 2 in a collision, and Figure 11B to Figure 11E show states in which the main input position of an impact load into the vehicle structure 2 sequentially changes. In Figure 11A to Figure 11E, the main input position of an impact load and the input direction are shown by outline arrows, and the illustration of the outer panel 4 is omitted.

As shown in Figure 11A, the protruding part 23 is a portion of the reinforcing member 5 which protrudes the most toward the vehicle outer side (front side) in the vehicle front-rear direction, and hence, an impact load of the colliding object S is first received by the protruding part 23. Consequently, before the load is transferred to the sensor peripheral part 20, the protruding part 23 and the periphery of the protruding part 23 are deformed, thus impact is absorbed. Next, in the vehicle front-rear direction, the tip position 20a of the sensor peripheral part 20 on the vehicle outer side and the connection position 6x0 for connecting the low rigidity member 6 to the outer panel 4 (the frontend surface of the pedestal part 4b) are located within the predetermined very small range as described above. As a result, the impact load of the colliding object S is received by the sensor peripheral part 20 of the reinforcing member 5 and the side parts 58 of the low rigidity member 6. Consequently, the load received by the sensor peripheral part 20 is transferred to the first vehicle body frame member 3a, and the load received by the side parts 58 is transferred to the second vehicle body frame member 3b, and hence, the impact load is dispersed. Next, as shown in Figure 11B, when the colliding object S approaches the vehicle inner side, due to deformation of the lower part of the reinforcing member 5 and the low rigidity member 6, impact energy is absorbed as deformation of the lower part of the reinforcing member 5 and the low rigidity member 6 or as breakage energy.

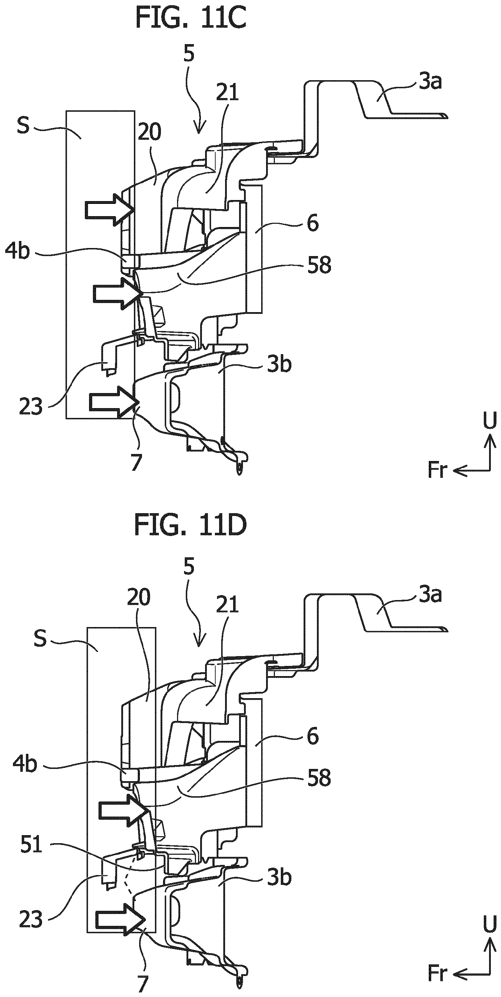

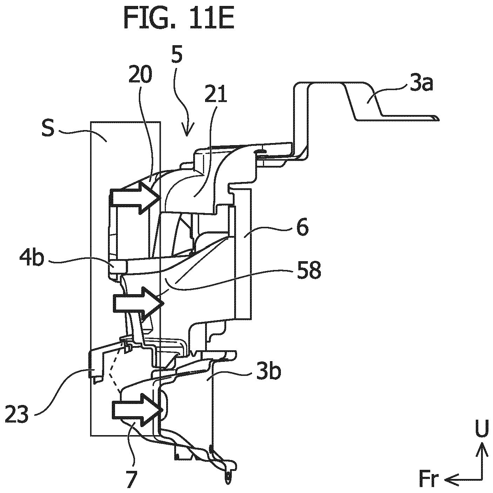

When the colliding object S further approaches the vehicle inner side, as shown in Figure 11C, the colliding object S is brought into contact with the impact absorbing member 7. As shown in Figure 11D, when the colliding object S further approaches the vehicle inner side, in the case of an offset collision, deformation of the lower transverse extension part 51 of the low rigidity member 6 and the impact absorbing member 7 is promoted. The sensor peripheral part 20 which is disposed at the center of the reinforcing member 5 in the vehicle width direction is not directly coupled to the first vehicle body frame member 3a and hence, the sensor peripheral part 20 is easily deformed, so that impact can be absorbed. When the colliding object S further approaches the vehicle inner side, as shown in Figure 11E, the colliding object S can also be received by the side reinforcing parts 21 provided on both sides in the vehicle width direction of the reinforcing member 5.

As described above, in the present embodiment, the vehicle structure 2 includes the outer panel 4 configured to form the design surface on the outer side of the vehicle for the front part of the vehicle, the vehicle body structural body 3 configured to support the outer panel 4 from the back surface side of the outer panel 4, the reinforcing member 5 configured to reinforce the outer panel 4 from the back surface side of the outer panel 4, the sensor device 9 mounted on the reinforcing member 5 and configured to sense the external environment of the vehicle, and the low rigidity member 6 having rigidity lower than the rigidity of the vehicle body structural body 3, disposed adjacent to the reinforcing member 5, and connected to the back surface of the outer panel 4. The reinforcing member 5 includes the sensor peripheral part 20 which is a portion of the reinforcing member 5 on the periphery of the sensor device 9, and in the vehicle front-rear direction, the tip position 20a of the sensor peripheral part 20 on the vehicle outer side and the tip position 6x1 of the low rigidity member 6 on the vehicle outer side or the connection position 6x0 for connecting the low rigidity member 6 to the outer panel 4 are located within the predetermined very small range.

With such a configuration, when a colliding object collides with the vehicle from the front side, an impact load can be received by both the reinforcing member 5 and the low rigidity member 6. As a result, the impact load in the collision is dispersed in a relatively wide area of the front part of the vehicle, and an impact energy is efficiently absorbed by deformation energy of the reinforcing member 5 and the low rigidity member 6. The impact load is dispersed in a wide area of the front part of the vehicle, and hence, it is possible to prevent concentration of the impact load at the sensor peripheral part 20, so that the sensor device 9 can be protected. As described above, the vehicle structure 2 is a vehicle structure that can efficiently absorb impact while protecting the sensor device 9 in a collision.

In the present embodiment, at least a portion of the low rigidity member 6 is disposed at a location offset from the sensor peripheral part 20 in the vehicle up-down direction.

With such a configuration, in the vehicle structure 2, an impact load in a collision occurring on the upper side can be received by the sensor peripheral part 20, and an impact load in the collision occurring on the lower side can be received by the low rigidity member 6, and hence, dispersion of the load and absorption of the impact can be more effectively achieved.

In the present embodiment, the reinforcing member 5 includes the side reinforcing parts 21 disposed on both sides in the vehicle width direction of the sensor peripheral part 20 and extending in the vehicle width direction, and the low rigidity member 6 includes the side parts 58 disposed on both sides in the vehicle width direction and disposed below the side reinforcing parts 21.

With such a configuration, in the vehicle structure 2, an impact load in an offset collision occurring on the upper side can be received by the side reinforcing parts 21, and an impact load in the offset collision occurring on the lower side can be received by the side parts 58, and hence, dispersion of the load and absorption of the impact can be further effectively achieved.

In the present embodiment, the side reinforcing parts 21 are disposed on the vehicle inner side in the vehicle front-rear direction relative to the tip position 20a of the sensor peripheral part 20 and the tip position 6x1 or the connection position 6x0 of the low rigidity member 6.

With such a configuration, after an impact load is received by the sensor peripheral part 20 and the side parts 58 in a collision, and before the collision object hits the surfaces (front surfaces) of the side reinforcing parts 21 on the side facing the outer panel 4, the vehicle structure 2, can efficiently absorb impact by deformation of the outer side part (front part) of the sensor peripheral part 20 and the outer side parts (front parts) of the side parts 58. Furthermore, deformation of the side parts 58 of the low rigidity member 6, particularly in an offset collision, is promoted, and a deformation range (crush stroke) of the side parts 58 can be reliably ensured.

In the present embodiment, the vehicle body structural body 3 includes the first vehicle body frame member 3a extending in the vehicle width direction and the second vehicle body frame member 3b disposed at a position lower than the first vehicle body frame member 3a and extending in the vehicle width direction, the center of the second vehicle body frame member 3b in the vehicle width direction is provided with the support bracket 12 protruding upward from the second vehicle body frame member 3b and supporting the reinforcing member 5 from below, and at a height position corresponding to the target part (the support bracket 12 in the present embodiment) which is either one of the support bracket 12 or the second vehicle body frame member 3b, the center lower part of the low rigidity member 6 in the vehicle width direction is disposed on the vehicle outer side relative to the target part in the vehicle front-rear direction.

With such a configuration, in a collision, rearward movement of the low rigidity member 6 is restricted by the support bracket 12 or the second vehicle body frame member 3b, and hence, deformation of the low rigidity member 6 is promoted. That is, when coupling between the low rigidity member 6 and the reinforcing member 5 is released due to impact in a collision, for example, simple rearward movement of the entire low rigidity member 6 is prevented, and hence, deformation of the low rigidity member 6 is promoted.

In the present embodiment, the second vehicle body frame member 3b is provided with the impact absorbing members 7 that protrude toward the vehicle outer side in the vehicle front-rear direction from the second vehicle body frame member 3b, the impact absorbing members 7 are disposed below the low rigidity member 6 and, in the vehicle front-rear direction, the protruding tip positions 7x of the impact absorbing members 7 and the tip position 6x1 or the connection position 6x0 of the low rigidity member 6 are located within the predetermined very small range.

With such a configuration, in the vehicle structure 2, an impact load in a collision occurring on the upper side can be received by the low rigidity member 6, and an impact load in the collision occurring on the lower side can be received by the impact absorbing members 7, and hence, dispersion of the load and absorption of the impact can be further effectively achieved.

In the present embodiment, the reinforcing member 5 includes the protruding part 23 protruding toward the vehicle outer side in the vehicle front-rear direction from the lower part of the reinforcing member 5, and at a height position corresponding to the support bracket 12, the protruding part 23 is disposed on the vehicle outer side relative to the support bracket 12 in the vehicle front-rear direction.

With such a configuration, an impact load in a collision transferred to the protruding part 23 is easily released to the support bracket 12. As a result, deformation of the support bracket 12 is promoted, and impact is absorbed, and in addition, transmission of an impact load to the sensor peripheral part 20 in a collision is reduced, and the sensor device 9 is protected.

In the present embodiment, the reinforcing member 5 includes the protruding part 23 protruding toward the vehicle outer side in the vehicle front-rear direction from the lower part of the reinforcing member 5, and the protruding tip position 23a of the protruding part 23 is located on the vehicle outer side in the vehicle front-rear direction relative to the tip position 20a of the sensor peripheral part 20.

With such a configuration, the protruding part 23 and the periphery of the protruding part 23 are deformed before an impact load is applied to the sensor peripheral part 20 and hence, deformation and displacement of the sensor peripheral part 20, on which the sensor device 9 is mounted, are reduced, and thus the sensor device 9 is protected.

In the present embodiment, the protruding part 23 protrudes toward the vehicle outer side in the vehicle front-rear direction from the position on the vehicle inner side relative to the tip position 20a of the sensor peripheral part 20.

With such a configuration, a deformation range (crush stroke) of the protruding part 23 in a collision can be increased, and the protruding part 23 is deformed before an impact load is applied to the sensor peripheral part 20. That is, the proximal end portion of the protruding part 23 (the proximal end portion of the front-rear wall 231) is located at a position on the rear side relative to the tip position 20a of the sensor peripheral part 20, and hence, the protrusion amount of the protruding part 23 is increased, and thus, deformation of the periphery of the proximal end portion of the protruding part 23 can be promoted. As a result, impact caused by the collision is absorbed by deformation of the protruding part 23, and thus deformation of the sensor peripheral part 20 is reduced, leading to the enhancement of protection performance for the sensor device 9.

Although the embodiment of the present invention and the modification of the embodiment have been described heretofore, the present invention is not limited to the embodiment and the modification of the embodiment, and in addition, various modifications and changes may be further made within the scope of the present invention.

For example, in the embodiment, although the vehicle structure 2 is used as the structure for the front part of the vehicle 1, the configuration is not limited to the above, and the vehicle structure 2 may be used as the structure for the rear part of the vehicle 1. In this case, in the above-mentioned description, "front side" is replaced with "rear side" and, in the front-rear direction, "outer side" indicates the rear side, "back side" indicates the front side, "outer surface" indicates the rear surface, and "back surface" indicates the front surface.

The vehicle structure 2 is configured to have the positional relationship between the sensor peripheral part 20 and the low rigidity member 6 in which, in the vehicle front-rear direction, the tip position 20a of the sensor peripheral part 20 on the vehicle outer side and the tip position 6x1 of the low rigidity member 6 on the vehicle outer side or the connection position 6x0 for connecting the low rigidity member 6 to the outer panel 4 are located within the predetermined very small range. However, the vehicle structure 2 need not have the configuration having the positional relationship. In this case, it is sufficient for the vehicle structure 2 to have the configuration having the front-rear (longitudinal) relationship between the protruding tip position 23a of the protruding part 23 and the tip position 20a of the sensor peripheral part 20. That is, it is sufficient for the vehicle structure 2 to be a vehicle structure including the outer panel 4, the vehicle body structural body 3, the reinforcing member 5, and the sensor device 9, the vehicle structure being characterized in that the reinforcing member 5 includes the sensor peripheral part 20 which is a portion of the reinforcing member 5 on the periphery of the sensor device 9, and the protruding part 23 protruding toward the vehicle outer side in the vehicle front-rear direction from the lower part of the reinforcing member 5, and the protruding tip position 23a of the protruding part 23 is located on the vehicle outer side in the vehicle front-rear direction relative to the tip position 20a of the sensor peripheral part 20 on the vehicle outer side. With such a configuration, the protruding part 23 and the periphery of the protruding part 23 are deformed before an impact load is applied to the sensor peripheral part 20, and hence, deformation and displacement of the sensor peripheral part 20 are reduced, and thus, the sensor device 9 is protected. Accordingly, the vehicle structure 2 according to the present modification is also a vehicle structure that can efficiently absorb an impact while protecting the sensor device 9 in a collision. Various configurations applied to the vehicle structure 2 according to the present embodiment are also applicable to the vehicle structure 2 according to the modification.

### [Reference Signs List]

- 1: vehicle
- 2: vehicle structure
- 3: vehicle body structural body
- 3a: first vehicle body frame member
- 3a1: front flange
- 3b: second vehicle body frame member
- 4: outer panel
- 4a: front grille
- 4b: pedestal part
- 5: reinforcing member
- 6: low rigidity member
- 6a: panel fixing part
- 6x0: connection position for connecting low rigidity member to outer panel
- 6x1: tip position of low rigidity member on vehicle outer side
- 7: impact absorbing member
- 7x: protruding tip position of impact absorbing member
- 8: bumper face
- 9: sensor device
- 10: sensor
- 11: sensor bracket
- 12: support bracket
- 20: sensor peripheral part
- 20a: tip position of sensor peripheral part on vehicle outer side
- 21: side reinforcing part
- 21a: side reinforcing part upper wall
- 21b: side reinforcing part front wall
- 21b 1: through hole
- 22: lower support part
- 22a: tip position of lower support part on vehicle outer side
- 23: protruding part
- 23a: protruding tip position of protruding part
- 231: front-rear wall
- 232: protruding end wall
- 24: sensor containing space
- 25: recessed part
- 25a: depth side wall
- 25b: side wall
- 25c: recessed-shape-forming lower wall
- 26: vertical rib
- 27: lower bulging part
- 30: upper wall
- 30a: upper connecting part
- 30b: positioning guide
- 31: lower wall
- 31a: lower connecting part
- 32A: first side part
- 32B: second side part
- 32: adjacent part
- 32a: peripheral wall part
- 32b: end wall part
- 32c: coupling piece
- 32d: upper peripheral wall part
- 32e: lower peripheral wall part
- 32f: vertical peripheral wall part
- 33: sensor mounting wall
- 34: opening part
- 35: sensor fixed part
- 36: connecting wall
- 50: upper transverse extension part
- 51: lower transverse extension part
- 52: vertical extension part
- 53: coupling part
- 53a: upper connection hole
- 53b: lower connection hole
- 53c: positioning hole
- 54: slot hole
- 55: vertical wall part
- 57: cut-out part
- 58: side part
- 60: coupling surface part
- 60a: first surface part
- 60b: first connecting surface part
- 60c: second surface part
- 60d: third surface part
- 60e: second connecting surface part
- 61: side wall surface part
- 62: first stepped part
- 63: second stepped part
- 64: protruding part
- S: colliding object

## Claims

1. A vehicle structure comprising:
an outer panel configured to form a design surface on an outer side of a vehicle for a front part or a rear part of the vehicle;
a vehicle body structural body configured to support the outer panel from a back surface side of the outer panel;
a reinforcing member configured to reinforce the outer panel from the back surface side of the outer panel; and
a sensor device mounted on the reinforcing member and configured to sense an external environment of the vehicle, the vehicle structure **characterized in that**
the vehicle structure includes a low rigidity member having rigidity lower than rigidity of the vehicle body structural body, disposed adjacent to the reinforcing member, and connected to a back surface of the outer panel,
the reinforcing member includes a sensor peripheral part which is a portion of the reinforcing member on a periphery of the sensor device, and
in a vehicle front-rear direction, a tip position of the sensor peripheral part on a vehicle outer side and a tip position of the low rigidity member on the vehicle outer side or a connection position for connecting the low rigidity member to the outer panel are located within a predetermined very small range.

2. The vehicle structure according to claim 1, wherein at least a portion of the low rigidity member is disposed at a location offset from the sensor peripheral part in a vehicle up-down direction.

3. The vehicle structure according to claim 2, wherein the reinforcing member includes side reinforcing parts disposed on both sides of the sensor peripheral part in a vehicle width direction, and extending in the vehicle width direction, and
the low rigidity member includes side parts disposed on both sides in the vehicle width direction, and disposed below the side reinforcing parts.

4. The vehicle structure according to claim 3, wherein the side reinforcing parts are disposed on a vehicle inner side in the vehicle front-rear direction relative to the tip position of the sensor peripheral part and the tip position or the connection position of the low rigidity member.

5. The vehicle structure according to claim 4, wherein the vehicle body structural body includes a first vehicle body frame member extending in the vehicle width direction, and a second vehicle body frame member disposed at a position lower than the first vehicle body frame member and extending in the vehicle width direction,
a center of the second vehicle body frame member in the vehicle width direction is provided with a support bracket protruding upward from the second vehicle body frame member and supporting the reinforcing member from below, and
at a height position corresponding to a target part which is either one of the support bracket or the second vehicle body frame member, a center lower part of the low rigidity member in the vehicle width direction is disposed on the vehicle outer side relative to the target part in the vehicle front-rear direction.

6. The vehicle structure according to claim 5, wherein the second vehicle body frame member is provided with an impact absorbing member protruding toward the vehicle outer side in the vehicle front-rear direction from the second vehicle body frame member,
the impact absorbing member is disposed below the low rigidity member, and
in the vehicle front-rear direction, a protruding tip position of the impact absorbing member and the tip position or the connection position of the low rigidity member are located within the predetermined very small range.

7. The vehicle structure according to claim 1, wherein the vehicle body structural body includes a first vehicle body frame member extending in the vehicle width direction, and a second vehicle body frame member disposed at a position lower than the first vehicle body frame member and extending in the vehicle width direction,
the second vehicle body frame member is provided with an impact absorbing member protruding toward the vehicle outer side in the vehicle front-rear direction from the second vehicle body frame member,
the impact absorbing member is disposed below the low rigidity member, and
in the vehicle front-rear direction, a protruding tip position of the impact absorbing member and the tip position or the connection position of the low rigidity member are located within the predetermined very small range.

8. The vehicle structure according to claim 1, wherein the vehicle body structural body includes a first vehicle body frame member extending in the vehicle width direction, and a second vehicle body frame member disposed at a position lower than the first vehicle body frame member and extending in the vehicle width direction,
a center of the second vehicle body frame member in the vehicle width direction is provided with a support bracket protruding upward from the second vehicle body frame member and supporting the reinforcing member from below,
the reinforcing member includes a protruding part protruding toward the vehicle outer side in the vehicle front-rear direction from a lower part of the reinforcing member, and
at a height position corresponding to the support bracket, the protruding part is disposed on the vehicle outer side relative to the support bracket in the vehicle front-rear direction.

9. The vehicle structure according to claim 1, wherein the reinforcing member includes a protruding part protruding toward the vehicle outer side in the vehicle front-rear direction from a lower part of the reinforcing member, and
a protruding tip position of the protruding part is located on the vehicle outer side in the vehicle front-rear direction relative to the tip position of the sensor peripheral part.

10. A vehicle structure comprising:
an outer panel configured to form a design surface on an outer side of a vehicle for a front part or a rear part of the vehicle;
a vehicle body structural body configured to support the outer panel from a back surface side of the outer panel;
a reinforcing member configured to reinforce the outer panel from the back surface side of the outer panel; and
a sensor device mounted on the reinforcing member and configured to sense an external environment of the vehicle, the vehicle structure **characterized in that**
the reinforcing member includes a sensor peripheral part which is a portion of the reinforcing member on a periphery of the sensor device, and a protruding part protruding toward a vehicle outer side in a vehicle front-rear direction from a lower part of the reinforcing member, and
a protruding tip position of the protruding part is located on the vehicle outer side in the vehicle front-rear direction relative to a tip position of the sensor peripheral part on the vehicle outer side.

11. The vehicle structure according to claim 9 or 10, wherein the protruding part protrudes, in the vehicle front-rear direction, toward the vehicle outer side from a position on a vehicle inner side relative to the tip position of the sensor peripheral part.

12. The vehicle structure according to claim 9 or 10, wherein the vehicle body structural body includes a first vehicle body frame member extending in the vehicle width direction, and a second vehicle body frame member disposed at a position lower than the first vehicle body frame member and extending in the vehicle width direction,
a center of the second vehicle body frame member in the vehicle width direction is provided with a support bracket protruding upward from the second vehicle body frame member and supporting the reinforcing member from below, and
at a height position corresponding to the support bracket, the protruding part is disposed on the vehicle outer side relative to the support bracket in the vehicle front-rear direction.
